Europäisches Patentamt

European Patent Office

Office européen des brevets

(19)

(11) Numéro de publication: **0 142 393**
**A2**

(12) **DEMANDE DE BREVET EUROPEEN**

(21) Numéro de dépôt: **84401774.9**

(22) Date de dépôt: **07.09.84**

(51) Int. Cl.⁴: **G 02 B 6/28**

(30) Priorité: **09.09.83 FR 8314380**

(43) Date de publication de la demande:
**22.05.85 Bulletin 85/21**

(84) Etats contractants désignés:
**AT BE CH DE FR GB IT LI LU NL SE**

(71) Demandeur: **SOCIETE D'OPTIQUE, PRECISION ELECTRONIQUE ET MECANIQUE - SOPELEM**
**102 rue Chaptal**
**F-92300 Levallois-Perret(FR)**

(72) Inventeur: **Sellin, Rémy**
**42 allée Louis Braille**
**F-77400 Lagny-sur-Marne(FR)**

(72) Inventeur: **Baluteau, Jean-Michel**
**77 allée de Chartres**
**F-93190 Livry-gargan(FR)**

(72) Inventeur: **Fillol, Bernard**
**126 bd du Montparnasse**
**F-75014 Paris(FR)**

(72) Inventeur: **Moirez, Jacques**
**4 avenue des Gobelins**
**F-75005 Paris(FR)**

(72) Inventeur: **Saint-Sevin, Michel**
**1bis rue des 3, soeurs**
**F-93220 Gagny(FR)**

(74) Mandataire: **Phélip, Bruno et al,**
**c/o Cabinet Harlé & Phélip 21, rue de la Rochefoucauld**
**F-75009 Paris(FR)**

(54) Dispositif de couplage de câbles de fibres optiques.

(57) L'invention se rapporte à un dispositif de couplage de câbles de fibres optiques destiné au multiplexage et au démultiplexage.

Il est caractérisé par le fait qu'il comporte, pour coupler un câble de fibres (1) dit principal et deux câbles de fibres (2, 3) dits secondaires, deux systèmes optiques (61, 62, 63, 4 ou 7, 5) constitués par d'une part un élément réflecteur dichroïque (4 ou 5) qui recevant, de chaque fibre du câble principal (1), un faisceau lumineux le scinde en deux faisceaux lumineux dont les domaines de longueurs d'onde sont distincts et qui sont envoyés sur deux fibres des deux câbles secondaires (2, 3) ou qui recevant de deux fibres des deux câbles secondaires deux faisceaux lumineux dont les domaines de longueurs d'onde sont distincts, les groupe en un seul faisceau lumineux envoyé sur une fibre du câble principal et par d'autre part au moins un objectif convergent (61, 62, 63 ou 7) de manière qu'un objectif (61 ou 7) soit placé entre ledit élément réflecteur dichroïque (4 ou 5) et le câble principal (1).

EP 0 142 393 A2

./...

Fig 1

"Dispositif de couplage de cables de fibres optiques."

La présente invention se rapporte à un dispositif de couplage de cables de fibres optiques destiné au multiplexage et au démultiplexage en longueurs d'onde.

Il existe des dispositifs de multiplexage et démultiplexage couplant des fibres optiques de manière que le faisceau incident issu d'une fibre optique émettrice soit scindé en deux faisceaux dont les domaines de longueurs d'onde sont distincts et qui sont reçus par deux fibres réceptrices (inversement les faisceaux émis par deux fibres pourraient être réunis en un seul faisceau). Ces dispositifs nécessitent un grand nombre d'éléments optiques pour coupler plusieurs fibres optiques émettrices à plusieurs fibres optiques réceptrices.

La présente invention a pour but de pallier les inconvénients des dispositifs connus. Le dispositif selon l'invention couple simultanément des fibres optiques d'un câble principal aux fibres optiques de deux câbles secondaires tout en réalisant le démultiplexage ou le multiplexage en longueurs d'onde. Ce couplage simultané est obtenu avec un nombre minimum d'éléments optiques.

Le dispositif selon l'invention couple trois câbles de fibres optiques et il est caractérisé par le fait qu'il comporte pour coupler un câble de fibres dit principal et deux câbles de fibres dits secondaires, deux systèmes optiques constitués par d'une part un élément réflecteur dichroïque qui, recevant de chaque fibre du câble principal un faisceau lumineux, le scinde en deux faisceaux lumineux dont les domaines de longueurs d'onde sont distincts et qui sont envoyés sur deux fibres des deux câbles secondaires ou qui, recevant de deux fibres des deux cables secondaires, deux faisceaux lumineux, dont les domaines de longueurs d'onde sont distincts, les groupe en un seul faisceau lumineux envoyé sur une fibre du câble principal et par, d'autre part, au moins un objectif convergent de manière qu'un objectif convergent soit placé entre ledit élément réflecteur dichroïque et le câble principal.

Selon une caractéristique, l'élément réflecteur dichroïque est constitué par une lame dichroïque, les deux systèmes optiques comprenant un objectif convergent, commun aux deux systèmes et placé entre le câble principal et ladite lame dichroïque et deux objectifs convergents placés chacun entre ladite lame dichroïque et un câble secondaire.

Selon une autre caractéristique, les foyers des trois objectifs sont sensiblement confondus et sensiblement situés sur la lame dichroïque et les extrémités des fibres de chaque câble sont sensiblement situées dans un plan focal de l'objectif le plus proche.

Selon un autre mode de réalisation de l'invention, l'élément réflecteur dichroïque est constitué par un prisme dichroïque, ce prisme dichroïque étant associé à un seul objectif placé entre le dit prisme et le cable principal et les deux câbles secondaires pour constituer lesdits systèmes optiques.

Selon une caractéristique, le foyer image de l'objectif est sensiblement confondu avec le prisme dichroïque et les extrémités des fibres des câbles sont sensiblement situées dans le plan focal objet.

L'invention va maintenant être décrite avec plus de détails en ce référant à des modes de réalisation donnés à titre d'exemples et représentés par les dessins annexés.

La figure 1 représente un premier mode de réalisation du dispositif selon l'invention.

La figure 2 représente un second mode de réalisation du dispositif selon l'invention.

Chaque dispositif représenté couple un câble de fibres optiques 1 dit principal à deux câbles de fibres optiques 2 et 3 dits secondaires. Chaque câble 1, 2, 3 contient une pluralité de fibres optiques 11, 21, 31 respectivement, les nombres de fibres optiques par câble étant égaux.

Si les fibres du cable principal 1 sont émettrices, les fibres des câbles secondaires 2 et 3 sont alors réceptrices. Si les fibres des câbles secondaires 2 et 3 sont émettrices, les fibres du cable principal 1 sont alors réceptrices.

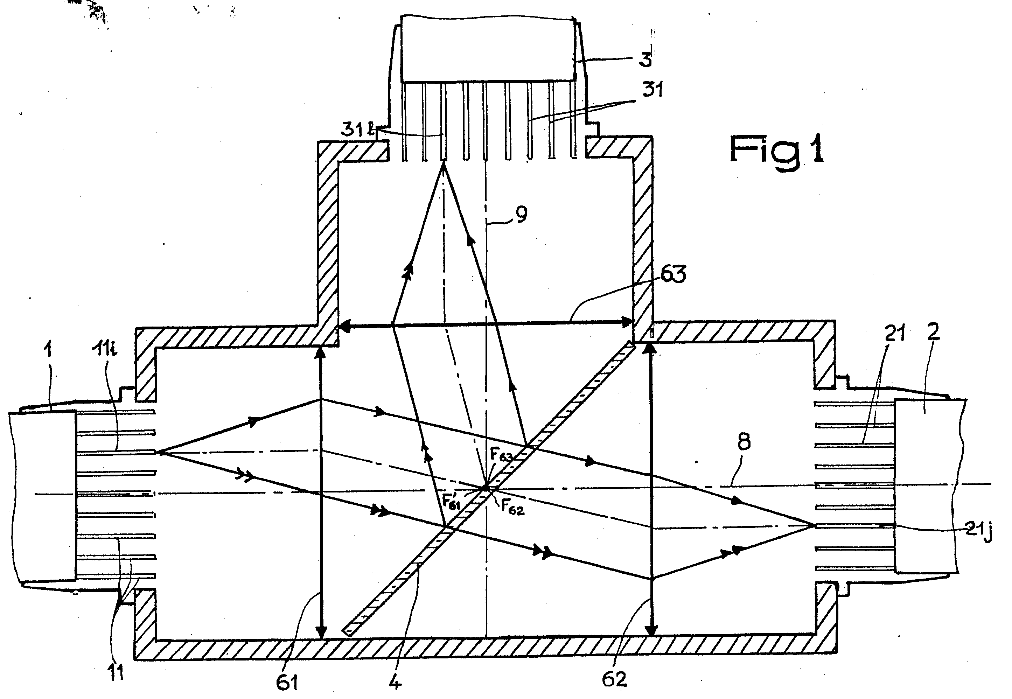

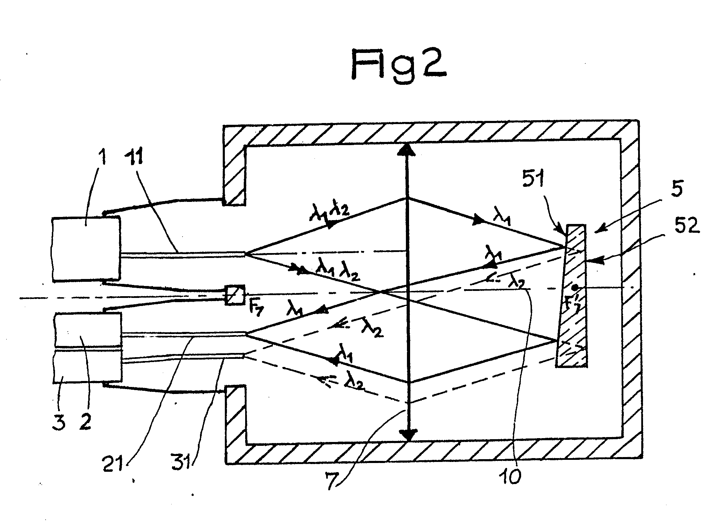

Le câble principal 1 est couplé au deux câbles secondaires 2 et 3 par deux systèmes optiques constitués par un élément dichroïque 4 et par trois objectifs 61, 62, 63 (figure 1) ou par un élément dichroïque 5 et un seul objectif 7 (figure 2).

Dans le cas où les fibres du câble principal 1 sont émettrices, l'élément réflecteur dichroïque 4 ou 5 scinde chaque faisceau incident issu d'une fibre du câble principal en deux faisceaux émergents dont les domaines de longueurs d'onde sont distincts.

Inversement dans le cas où les fibres des câbles secondaires 2 et 3 sont émettrices, l'élément réflecteur dichroïque 4 ou 5 combine, deux à deux, des faisceaux incidents dont les domaines de longueurs d'onde sont différents et qui sont issus des fibres émettrices des câbles secondaires 2 et 3, en un seul faisceau émergent.

Chaque système optique couple les extrémités des fibres du câble principal 1 et les extrémités des fibres d'un câble secondaire 2 ou 3.

Dans le mode de réalisation de la figure 1, les deux systèmes optiques sont constitués, d'une part, par un objectif 61, le réflecteur dichroïque 4 et l'objectif 62 et, d'autre part, par l'objectif 61, le réflecteur dichroïque 4 et l'objectif 63, l'objectif 61 placé entre le câble principal et le réflecteur dichroïque 4 étant commun aux deux systèmes. L'élément réflecteur dichroïque 4 est constitué par une lame dichroïque qui transmet des faisceaux lumineux caractérisés par un premier domaine de longueurs d'onde des fibres du câble principal 1 aux fibres du câble secondaire 2 et qui réfléchit des faisceaux lumineux caractérisés par un second domaine de longueurs d'onde, des fibres du câble principal 1 aux fibres du câble secondaire 3.

Les fibres du câble principal 1 sont alignées avec les fibres du câble secondaire 2, le câble secondaire 3 étant disposé latéralement. L'objectif 61 et l'objectif 62 sont centrés sur l'axe optique 8, entre les câbles 1 et 2, l'objectif 61 et l'objectif 63 étant centrés sur les axes optiques 8 et 9, entre les câbles 1 et 3. La lame dichroïque 4 est inclinée sur l'axe optique 8. L'objectif 61 est placé entre le câble principal et la lame dichroïque 4, les objectifs 62 et 63 étant placés respectivement entre la lame dichroïque 4 et le câble secondaire 2 et entre la lame dichroïque 4 et le câble secondaire 3.

Les objectifs 61 et 62 sont disposés de manière que le foyer image de 61 et le foyer objet de 62 soient confondus sur la surface réfléchissante de la lame dichroïque 4. De même les objectifs 61 et 63 sont disposés de manière que le foyer image de 61 et le foyer objet de 63 soient confondus sur la surface réfléchissante de la lame dichroïque 4. Ainsi les distances entre les deux objectifs 61 et 62 d'une part et entre les objectifs 61 et 63 d'autre part sont égales à la somme des distances focales de ces deux objectifs.

Les extrémités des fibres 11 ou 21 ou 31 de chaque câble sont situées dans un plan focal de l'objectif le plus proche 61 ou 62 ou 63 respectivement.

Chaque objectif 61, 62, 63, est séparé de la lame dichroïque par un intervalle d'air. Chaque objectif 61, 62, 63 est constitué de préférence par au moins deux lentilles convergentes.

4                

Pour supprimer les pertes à la sortie ou à l'entrée des fibres, on pourrait avoir avantage à accoler des blocs de verre réalisant chacun la jonction entre un objectif 61, 62, 63, et les extrémités des fibres associées 11, 21, 31, respectivement.

Le fonctionnement du dispositif représenté par la figure 1 va maintenant être expliqué. Le faisceau lumineux issu d'une quelconque fibre émettrice 11 est collimaté par l'objectif 61 vers la lame dichroïque 4 qui transmet un premier domaine de longueurs d'onde vers l'objectif 62 et réfléchit un second domaine de longueurs d'onde vers l'objectif 63.

L'objectif 62 focalise le faisceau issu d'une fibre émettrice 11 et transmis par la lame dichroïque sur une fibre réceptrice 21. De même l'objectif 63 focalise le faisceau issu d'une fibre 11 et réfléchit par la lame dichroïque sur une fibre réceptrice 31. Une fibre 11 i est couplée aux fibres 21 j et 31 1. La fibre 21 j et la fibre 11 i sont symétriques par rapport au point de coincidence du foyer image de l'objectif 61 et du foyer objet de l'objectif 62. De même la fibre 31 1 et la fibre 11 i sont symétriques par rapport au plan perpendiculaire à la lame dichroïque passant par le point de coincidence précédent.

Le flux émis par un point d'une fibre émettrice 11 i se situe dans un cône dont l'axe est normal à la surface émettrice de cette fibre. De même chaque fibre de réception 21 j et 31 1 ne transmet que les rayons arrivant dans un cône dont l'axe est normal à la surface de réception de ces fibres. Du fait que les foyers intermédiaires des objectifs 61 et 62 d'une part et 61 et 63 d'autre part sont confondus, tous les axes des cônes de lumière émis par les points de la surface émettrice d'une fibre 11 i arrivent perpendiculairement à la surface réceptrice de la fibre couplée 21 i ou 31 1.

Le dispositif ainsi décrit constitue un système télécentrique tel que la pupille d'entrée et les pupilles de sortie sont rejetées à l'infini, les pupilles intermédiaires étant dans le plan focal commun des objectifs 61 et 62 ou des objectifs 61 et 63.

Ce dispositif permet de réaliser le multiplexage ou le démultiplexage des 3 cables de fibres optiques 1, 2, 3, par l'intermédiaire uniquement de trois objectifs 61, 62, 63, et de la lame dichroïque 4.

Dans le mode de réalisation de la figure 2, toutes les fibres optiques des câbles 1, 2, 3 sont parallèles et situées d'un même côté de l'objectif 7. L'élément réflecteur dichroïque 5 est constitué par un prisme comportant à l'avant une face dichroïque 51 et à l'arrière une face réfléchissante 52, ces deux faces étant inclinées l'une par rapport à l'autre. La face avant 51 réfléchit le faisceau lumineux incident issu d'une fibre du câble principal 1 dans un premier domaine de longueurs d'onde. La face arrière 52 réfléchit ce même faisceau lumineux dans un second domaine de longueurs d'onde . Le prisme 5 divise un faisceau lumineux incident issu d'une fibre du cable principal 1 en deux faisceaux émergents séparés dans l'espace et dont les domaines de longueurs d'onde sont distincts. Chaque faisceau émergent est dirigé vers une fibre d'un cable secondaire 2 ou 3.

Les deux systèmes optiques sont constitués par la face 51 et l'objectif 7 d'une part et par la face 52 et l'objectif 7 d'autre part, cet objectif commun 7 étant placé entre le prisme 5 et les cables 1, 2, 3. Le système constitué par la face 51 et l'objectif 7 est placé sur le trajet des signaux lumineux entre les cables 1 et 2. Le système constitué par la face 52 et l'objectif 7 est placé sur le trajet des signaux lumineux entre les cables 1 et 3.

L'objectif 7 est disposé de manière que son foyer image F'7 soit sensiblement confondu avec le prisme 5 et que les extrémités des fibres 11, 21, 31, soient situées dans son plan focal objet. L'objectif 7 est constitué de préférence par au moins deux lentilles.

Pour supprimer les pertes à la sortie ou à l'entrée des fibres 11, 21, 31, on pourrait avoir avantage à accoler un bloc de verre réalisant la jonction entre ces fibres et l'objectif 7.

Le fonctionnement du dispositif de la figure 2 va maintenant être expliqué.

Le faisceau de lumière issu d'une fibre émettrice du câble principal 1 est collimaté par l'objectif 7. La face avant 51 réfléchit un premier domaine de longueurs d'onde et la face arrière 52 réfléchit un second domaine de longueurs d'onde. Les deux faisceaux émergents dont les domaines de longueurs d'onde sont distincts sont focalisés par l'objectif 7 sur deux fibres réceptrices 21 et 31 des deux câbles secondaires 2 et 3. L'angle du prisme et la focale de l'objectif déterminent le décalage spatial des fibres optiques 21 et 31 au niveau du plan focal de l'objectif 7.

Le flux émis par un point d'une fibre émettrice 11 i se situe dans un cône dont l'axe est normal à la surface émettrice de cette fibre. De la même façon chaque fibre de réception 21 j et 31 l ne transmette que les rayons arrivant dans un cône dont l'axe est normal à la surface d'entrée de cette fibre. Du fait que le foyer image F'7 de l'objectif 7 est sensiblement confondu avec les surfaces 51 et 52 du prisme dichroïque, tous

les axes des cônes de lumière émis par les points de la surface émettrice de la fibre 11 i arrivent perpendiculairement aux surfaces d'entrée des fibres réceptrices 21 j et 31 1. Le dispositif ainsi décrit constitue un système télécentrique tel que la pupille d'entrée et les pupilles de sortie sont rejetées à l'infini, les pupilles intermédiaires étant dans le plan focal situé au niveau du prisme dichroïque 5.

Le couplage optimum est obtenu lorsque les extrémités des fibres optiques sont situées dans les plans focaux des objectifs et que les foyers intermédiaires sont confondus. Si le positionnement des extrémités des fibres optiques par rapport aux plans focaux et si la coïncidence des foyers intermédiaires ne sont pas réalisés à quelques pourcents près, les pertes de couplage deviennent importantes et le couplage n'est plus admissible.

Il est bien entendu que l'on peut sans sortir du cadre de l'invention imaginée des variantes et des perfectionnements de détail et de même envisager l'emploi de moyens équivalents. Le prisme 5 pourrait être remplacé par une lame dichroïque et un miroir incliné par rapport à ladíte lame. L'élément réflecteur dichroïque pourrait être constitué par un prisme pentagonal accolé à un prisme triangulaire et étant séparé de celui-ci par une surface dichroïque.

REVENDICATIONS

1.- Dispositif de couplage de trois câbles de fibres optiques (1, 2, 3),

caractérisé par le fait qu'il comporte, pour coupler un câble de fibres (1) dit principal et deux câbles de fibres (2, 3) dits secondaires, deux systèmes optiques (61, 62, 63, 4 ou 7,5) constitués par d'une part un élément réflecteur dichroïque (4 ou 5) qui recevant, de chaque fibre du câble principal (1), un faisceau lumineux le scinde en deux faisceaux lumineux dont les domaines de longueurs d'onde sont distincts et qui sont envoyés sur deux fibres des deux câbles secondaires (2, 3) ou qui, recevant de deux fibres des deux câbles secondaires, deux faisceaux lumineux dont les domaines de longueurs d'onde sont distincts, les groupe en un seul faisceau lumineux envoyé sur une fibre du câble principal et par d'autre part au moins un objectif convergent (61, 62, 63 ou 7) de manière qu'un objectif (61 ou 7) soit placé entre ledit élément réflecteur dichroïque (4 ou 5) et le câble principal (1).

2.- Dispositif selon la revendication 1,
caractérisé par le fait que l'élément réflecteur dichroïque est constitué par une lame dichroïque (4), les deux systèmes optiques comprenant un objectif convergent (61), commun au deux systèmes et placé entre le câble principal et ladite lame dichroïque et deux objectifs convergents (62 ou 63) placés chacun entre ladite lame dichroïque et un câble secondaire (2 ou 3).

3.- Dispositif selon la revendication 2,
caractérisé par le fait que les foyers des trois objectifs (61, 62, 63), sont sensiblement confondus et sensiblement situés sur la lame dichroïque (4) et que les extrémités des fibres de chaque câble sont sensiblement situées dans un plan focal de l'objectif le plus proche.

4.- Dispositif selon la revendication 1,
caractérisé par le fait que l'élément réflecteur dichroïque (5) est constitué par un prisme dichroïque et est associé à un seul objectif (7) placé entre lesdits prismes et le câble principal et les deux câbles secondaires pour constituer lesdits systèmes optiques.

5.- Dispositif selon la revendication 4,
caractérisé par le fait que le foyer image de l'objectif (7) est sensiblement confondu avec le prisme dichroïque et que les extrémités des fibres des câbles sont sensiblement situées dans son plan focal objet.

Fig 1

0142393

Fig2